# FASCICULE DE BREVET EUROPEEN

(11) **EP 3 359 868 B1**
(45) Date de publication et mention de la délivrance du brevet: **01.07.2020**
(21) Numéro de dépôt: 16785186.4
(22) Date de dépôt: 15.09.2016
(51) Int. Cl.: F17C 13/02

(54) **DISPOSITIF DE FOURNITURE DE FLUIDE SOUS PRESSION**
VORRICHTUNG ZUR BEREITSTELLUNG VON DRUCKBEAUFSCHLAGTEM FLUID
DEVICE FOR PROVIDING FLUID UNDER PRESSURE

(30) Priorité: 07.10.2015 FR 1559527
(43) Date de publication de la demande: 15.08.2018
(73) Titulaire: L'Air Liquide Société Anonyme pour l'Etude et l'Exploitation des Procédés Georges Claude, 75007 Paris (FR)
(72) Inventeur: BERNARD, Philippe, 60000 Goincourt (FR); BACOT, Patrick, 92190 Meudon (FR); LAURENT, David, 78610 Le Perray En Yvelines (FR)
(74) Mandataire: De Cuenca, Emmanuel Jaime
(86) Numéro de dépôt international: PCT/FR2016/052334
(87) Numéro de publication internationale: WO 2017/060579

(56) Documents cités:
- EP-A1- 1 717 564
- EP-A1- 2 998 636
- EP-A1- 2 998 637
- EP-A2- 2 829 786
- EP-B1- 3 161 371
- WO-A1-2013/041823
- FR-A1- 3 019 623
- FR-A1- 3 022 972
- GB-A- 2 486 018
- US-A1- 2006 036 515
- US-A1- 2006 142 974
- US-A1- 2008 221 808

## Description

L'invention concerne un dispositif de fourniture de fluide sous pression.

L'invention concerne plus particulièrement un dispositif de fourniture de fluide sous pression, notamment de gaz sous pression, comprenant une bouteille de fluide sous pression comprenant au moins un premier robinet raccordé à la bouteille et comprenant un circuit interne de fluide comportant un clapet d'isolation, le dispositif comprenant un appareil électronique de communication de données à distance sans fil par ondes électromagnétiques.

Les bouteilles de gaz ou leurs composants (corps, tête ou tout autres équipements et accessoires) peuvent-être égarés ou situés en un quelconque endroit indéterminé lors de leur utilisation. De même ces équipements peuvent être dans une configuration ou un état indéterminé. Par exemple, une bouteille de gaz peut être scellée, pleine, en cours d'utilisation, vide, en service, hors service, etc. De la même manière, un composant ou accessoire peut-être connecté ou non à la bouteille, en service, hors d'usage, etc. Le fait de ne pas connaître la localisation et l'état de ces éléments en temps réel, ne permet pas d'anticiper les événements ou d'optimiser la logistique et la production.

Il existe des systèmes de traçabilité nécessitant des opérations spécifiques et/ou manuelles (scan d'un code barre, d'une radio-étiquette « RFID », utilisation d'un portique de détection, etc.) afin de concentrer ces informations dans un système informatique. Ces systèmes connus ne sont pas synchrones et ne permettent pas de suivre efficacement les équipements en temps réel.

Le document EP1988327A1 décrit une solution connue de localisation de bouteilles et de traitement de données.

Le document EP1717564 A1 divulgue un dispositif stationnaire de fourniture de propane muni d'un système de communication de données à distance.

Le document WO2015/197946 (=EP3161371B1), qui constitue un art antérieur au titre de l'article 54(3) CBE décrit un dispositif de fourniture de fluide comprenant un organe électronique de communication à distance.

Un but de la présente invention est de pallier tout ou partie des inconvénients de l'art antérieur relevés ci-dessus.

Un but possible de l'invention peut être de proposer un système automatique ou non, permettant de connaître à chaque instant l'état et la position réelle d'une bouteille de fluide sous pression ou, le cas échéant, d'un de ses composants (tête, corps, accessoires, etc.).

A cette fin, le dispositif selon l'invention, par ailleurs conforme à la définition générique qu'en donne le préambule ci-dessus, est conforme à la revendication 1. Ainsi l'appareil électronique de communication comprend un organe de communication configuré pour communiquer sans fil selon l'un au moins des technologies de communication longue portée et basse consommation à modulation de fréquence et/ou de phase suivantes : la technologie de communication Lora® c'est-à-dire utilisant une modulation de fréquence à étalement de spectre et sauts de fréquence permettant notamment la reconstitution des données transmises même lorsqu'elles sont reçues avec un rapport signal-sur-bruit inférieur à 0 dB, opérant sur des bandes de fréquence déterminées, en particulier de 433,0 à 434,79 MHz, de 863 à 870 MHz, de 902 à 928 MHz, de 2400 à 2500 MHz, la technologie de communication de la société Sigfox utilisant une modulation de fréquence ou une modulation de phase synthétisant une modulation de fréquence, à bande très étroite (dite « UNB », « Ultra-Narrow Band »), permettant d'obtenir une densité spectrale de puissance importante afin d'augmenter le rapport signal à bruit, opérant sur des bandes de fréquence déterminées, en particulier de 433,0 à 434,79 MHz, de 863 à 870 MHz, de 902 à 928 MHz, de 2400 à 2500 MHz,.

Par ailleurs, des modes de réalisation de l'invention peuvent comporter l'une ou plusieurs des caractéristiques suivantes :
- le dispositif comporte au moins un organe électronique de réception des données transmises sans fil par l'appareil électronique de communication, l'organe électronique de réception étant configuré pour déterminer la position de l'appareil électronique de communication à partir des données transmises sans fil par ce dernier,
- le au moins un organe électronique de réception des données comprend au moins l'un parmi : une antenne raccordée à un réseau de communication, notamment un réseau de communication dématérialisé (« cloud ») comprenant au moins un serveur, un téléphone sans fil,
- l'appareil électronique de communication comprend au moins un organe de communication configuré pour communiquer sans fil selon la technologie « Bluetooth »,
- le moins un organe électronique de réception des données comprend un téléphone sans fil configuré pour communiquer selon la technologie « Bluetooth » et un boîtier électronique récepteur et émetteur de données sans fil configuré pour communiquer selon la technologie « Bluetooth » et selon le protocole de communication Lora® utilisant une modulation de fréquence à étalement de spectre et sauts de fréquence permettant notamment la reconstitution des données transmises même lorsqu'elles sont reçues avec un rapport signal-sur-bruit inférieur à 0 dB, opérant sur des bandes de fréquence déterminées, en particulier de 433,0 à 434,79 MHz, de 863 à 870 MHz, de 902 à 928 MHz, de 2400 à 2500 MHz, et/ou via le réseau de communication à bande de fréquence très étroite développé par la société Sigfox utilisant une modulation de fréquence ou une modulation de phase synthétisant une modulation de fréquence, à bande très étroite (dite « UNB », « Ultra-Narrow Band »), permettant d'obtenir une densité spectrale de puissance importante afin d'augmenter le rapport signal à bruit, opérant sur des bandes de fréquence déterminées, en particulier de 433,0 à 434,79 MHz, de 863 à 870 MHz, de 902 à 928 MHz, de 2400 à 2500 MHz, ledit boîtier récepteur et émetteur étant configuré pour recevoir des données transmises par l'organe de communication selon la technologie de communication longue portée et basse consommation et pour convertir et restituer ces données vers le téléphone selon la technologie « Bluetooth »,
- le boîtier récepteur et émetteur est configuré pour recevoir des données transmises selon la technologie « Bluetooth » par le téléphone et convertir et restituer ces données vers l'organe de communication selon la technologie de communication longue portée et basse consommation,
- le téléphone et/ou le boîtier récepteur comprend un accéléromètre et/ou magnétomètre,
- l'appareil électronique de communication comprend au moins un organe de communication configuré pour communiquer sans fil selon la technologie « Communication en champ proche » (« NFC ») et/ou selon la technologie « Identification par Radio Fréquence » (« RFID »),
- le dispositif de fourniture de fluide comprend un chapeau de protection monté sur la bouteille pour protéger le premier robinet et un second robinet raccordé de façon amovible sur le premier robinet ledit appareil électronique de communication étant situé sur la bouteille et/ou sur le chapeau et/ou sur le premier robinet et/ou sur le second robinet,
- l'appareil électronique de communication comprend au moins un premier organe de communication configuré pour communiquer sans fil selon la technologie « Communication en champ proche » (« NFC ») disposé sur l'un parmi : la bouteille, le chapeau, le premier robinet, le dispositif comprenant un second organe de communication configuré pour communiquer sans fil selon la technologie « Communication en champ proche » (« NFC ») disposé sur une première extrémité inférieure du second robinet et se plaçant de façon adjacente au premier organe de communication (« NFC ») lorsque le second robinet est raccordé sur le premier robinet pour permettre un échange de données,
- l'appareil électronique de communication comprend un troisième organe de communication configuré pour communiquer sans fil selon la technologie « Communication en champ proche » (« NFC ») disposé sur une seconde extrémité du second robinet située en partie supérieure du second robinet lorsque ce dernier est raccordé sur le premier robinet et la bouteille est en position verticale d'utilisation,
- l'appareil électronique de communication comprend un premier organe de communication configuré pour communiquer sans fil selon la technologie « Bluetooth » disposé sur la bouteille et/ou sur le chapeau et/ou sur le premier robinet,
- l'appareil électronique de communication comprend un second organe de communication configuré pour communiquer sans fil selon la technologie « Bluetooth » et situé sur le second robinet,
- la technologie de communication LoRa® utilise une modulation de fréquence à étalement de spectre et sauts de fréquence du type « FHSSS » (« Frequency Hopping Spread Spectrum » ou encore « Étalement de spectre par évasion de fréquence »), « DSSS » (« Direct Sequence Spread Spectrum » = « Etalement de spectre à séquence directe") et « CSS » (« Chirp Spread Spectrum » = « Etalement de Spectre Chirp »),
- la technologie de communication LoRa® utilise des séquences de 2⁶ à 2¹² chirps pour coder un bit, permettant des débits de 250 bits/s à 21900 bit/s suivant notamment les largeurs de canaux employés (typiquement, 125, 250 et 500 kHz,
- la technologie de communication LoRa® utilise une modulation selon un protocole tel que « LoRaWAN », définissant notamment des trames de longueur maximale 250 octets sur la couche MAC (Médium Access Control) correspondant à un maximum de 242 octets sur la couche applicative, et prévoyant des niveaux de puissance rayonnée jusqu'à 30 dBm (typiquement, une valeur par défaut de 20 dBm et une valeur maximum de 30 dBm sur la bande de 902 à 928 MHz, et une valeur par défaut de 14 dBm et une valeur maximum de 20 dBm sur la bande de 863 à 870 MHz),
- la technologie de communication de la société Sigfox utilise une modulation de fréquence à bande très étroite de 100Hz par exemple, à des débits de 100 à 1000 bit/s, employée par exemple avec des protocoles autorisant des puissances rayonnées jusqu'à 20 dBm et des trames de longueur maximale 12 octets sur la couche applicative, et d'une manière générale conçus pour l'échange, au sein d'une cellule de grande taille (de l'ordre du kilomètre à la dizaine de kilomètres de rayon), de messages courts entre plusieurs milliers d'objets et une station de base, la majeure partie des communications se faisant sur la voie montante,
- l'organe électronique de réception des données est configuré pour déterminer la position de l'appareil électronique de communication par l'une au moins des technologies suivantes : la trilatération, la triangulation, la multilatération,
- le téléphone et/ou le boîtier récepteur est configuré pour localiser l'appareil électronique de communication à partir des données transmises sans fil par ce dernier via un radio guidage conforme à l'une au moins parmi les technologies suivantes : par indication de la force du signal reçu (« RSSI » = "Received Signal Strength Indication »), par la mesure de l'angle d'arrivée (« Angle of arrivai »= « AoA »), LoS, par la mesure de la différence du temps d'arrivée des signaux (« Time Différence of Arrivai »= « TDoA »), ToF, TWTOF ou TWR, la mesure à deux directions deux côtés symétriques (SDS-TWR = « Symmetrical double-sided two-way ranging »), la technologie NFER®,
- le second robinet est muni d'un circuit interne de fluide, le second robinet comprenant un organe mobile d'actionnement du clapet d'isolation du premier robinet pour commander l'ouverture ou la fermeture de ce dernier,
- le premier et le second robinet comprennent des organes d'accrochages respectifs formant un système de connexion rapide mâle/femelle amovible du second robinet sur le premier robinet,
- lorsque le second robinet est en position connectée sur le premier robinet, le second robinet est partiellement logé dans le chapeau,
- l'appareil électronique de communication est configuré pour envoyer, recevoir ou stocker au moins une information parmi : une identification de la bouteille, une information relative à la nature du fluide contenu dans la bouteille, une information relative à la contenance maximale de la bouteille, une information relative à la quantité de fluide contenu dans la bouteille, une information d'identification du propriétaire ou utilisateur de la bouteille, une information relative au site d'utilisation de la bouteille, une information relative à la date de péremption du fluide contenu dans la bouteille, une information relative à une certification du fluide contenu dans la bouteille, un historique d'au moins une des informations précédentes.

L'invention peut concerner également tout dispositif ou procédé alternatif comprenant toute combinaison des caractéristiques ci-dessus ou ci-dessous, dans le cadre des revendications.

D'autres particularités et avantages apparaîtront à la lecture de la description ci-après, faite en référence aux figures dans lesquelles :
- la figure 1 représente une vue en coupe, schématique et partielle, illustrant un premier exemple de réalisation d'un dispositif de fourniture de fluide dans un état déconnecté,
- la figure 2 représente une vue en coupe, schématique et partielle, du dispositif de fourniture de fluide de la figure 1 dans un état connecté avec son système de communication et robinet distinct supplémentaire.

Le dispositif 1 de fourniture de fluide sous pression, notamment de gaz sous pression, comprend au moins une bouteille 2 de fluide sous pression comprenant au moins un premier robinet 3 raccordé à la bouteille 2. Le premier robinet 3 comprend un circuit 13 interne de fluide comportant un clapet 4 d'isolation.

Le dispositif 1 comprenant un appareil électronique de communication de données à distance sans fil par ondes électromagnétiques.

Selon une particularité avantageuse, l'appareil électronique de communication comprend un organe 18 de communication configuré pour communiquer sans fil selon l'une au moins des technologies de communication longue portée et basse consommation à modulation de fréquence et/ou de phase suivantes : la technologie de communication Lora®, la technologie de communication de la société Sigfox.

Par faible consommation, on désigne une faible consommation électrique, notamment, par exemple, une consommation caractérisée par une intensité aux bornes du modem radio (émetteur et/ou récepteur) de 20mA maximum en réception, et de 200mA maximum en émission..

Chaque technologie est caractérisée par une modulation de données, un ou des protocoles de communication et éventuellement du matériel physique spécifique.

La modulation c'est le choix des formes d'ondes qui portent l'information.

Le protocole de communication c'est l'ensemble des règles qui régissent la syntaxe et la sémantique des données échangées, les séquences possibles d'échanges, et les réglages des paramètres physiques des émetteurs et récepteurs au cours du temps (allumé/éteint, le choix du canal, le choix du débit, etc...). Il n'impose pas forcément d'utiliser une modulation particulière. Et en pratique, il y a plusieurs protocoles empilés les uns sur les autres.

La technologie LoRa® regroupe donc la modulation LoRa® et des protocoles, notamment le protocole LoRaWAN®. Bien entendu d'autres protocoles peuvent être utilisés avec la même modulation.

La technologie Sigfox est moins dissociable, elle comprend une modulation spécifique et un protocole spécifique.

Ceci permet d'améliorer l'échange d'informations à distance avec le dispositif et permet également une localisation plus facile de ce dernier.

De plus, la connaissance de ces informations de manière locale ou à distance, permet de fournir des services supplémentaires de gestion du dispositif, d'améliorer l'efficacité des utilisateurs et d'optimiser la chaine logistique.

L'utilisation de ces technologies de communication permet également de minimiser la consommation électrique du dispositif.

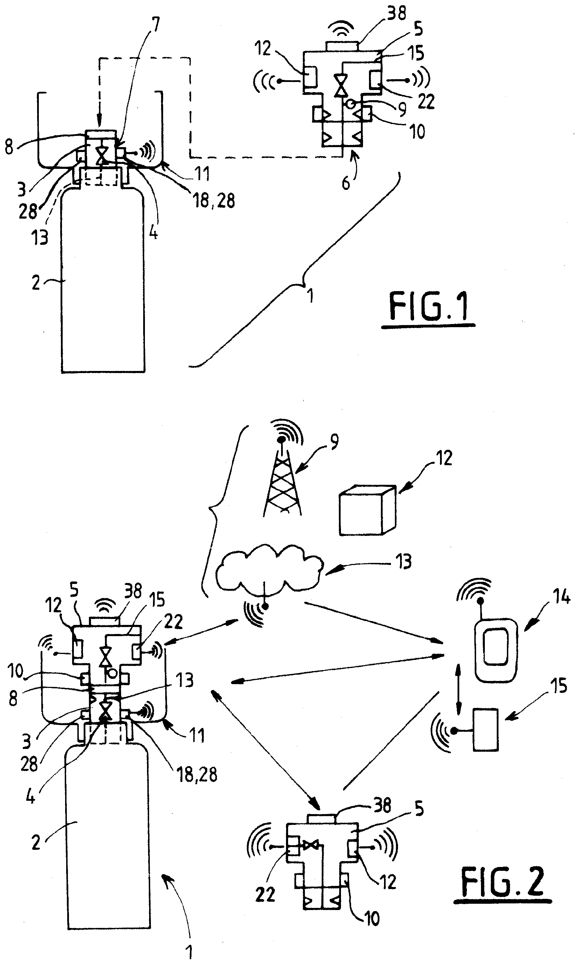

Dans l'exemple non limitatif de la figure 1, le dispositif de fourniture de fluide sous pression, notamment de gaz sous pression, comprend un premier ensemble fonctionnel comportant une bouteille 2 de fluide sous pression munie d'un orifice dans lequel est fixé un raccord fluidique ou port appelé ci-après « premier robinet » 3. Par soucis de simplification le terme « bouteille » utilisé ci*après peut désigner l'ensemble comprenant la bouteille 2, le premier robinet 3 et le chapeau 11.

Le premier robinet 3 peut-être un simple port de remplissage et/ou de soutirage muni d'un clapet à fermeture automatique (à ouverture par actionnement mécanique et/ou via une pression de gaz. Bien entendu, en variante, ce premier robinet peut être un robinet plus élaboré, muni notamment d'un clapet d'isolation commandé par un organe de commande manuel et/ou électrique et/ou pneumatique.

Le premier robinet 3 est par exemple vissé dans un orifice taraudé de la bouteille 2. C'est-à-dire que le premier 3 robinet est solidaire de la bouteille 2 (fixe) et n'a pas vocation à être démonté en configuration d'utilisation.

Le premier robinet 3 comprend classiquement un circuit 13 interne de fluide relié au volume interne de la bouteille 2. Le circuit comporte au moins un clapet 4 d'isolation. Bien entendu, le premier robinet 3 peut comprendre tout autre organe fonctionnel habituel pour un robinet.

Le dispositif 1 comporte un second robinet 5 formant une entité physique distincte du premier 2, 3 ensemble. Ce second robinet 5 est muni également d'un circuit 15 interne de fluide. De la même façon que pour le premier robinet 3, le circuit 15 interne du second robinet 5 peut comporter au moins un clapet d'isolation et/ou un détendeur de pression et/ou un régulateur de débit et/ou tout autre organe fonctionnel approprié pour un robinet.

Le premier robinet 3 et le second robinet 5 comprennent chacun des organes 6, 7 d'accrochages respectifs formant un système de connexion rapide amovible du second robinet 5 sur le premier 3 robinet (cf. figure 2 la position connectée). Par exemple, le système de connexion rapide peut comprendre un système à billes coopérant avec des nervures, des griffes d'accrochage coopérant avec des logements conjugués, un système à baïonnette et rainures correspondantes.

Le système de connexion rapide 6, 7 est par exemple du type mâle/femelle et permet l'attache mécanique du second robinet 5 sur le premier robinet 3 de façon démontable. Ce système de verrouillage peut comprendre un organe d'actionnement manuel, comprenant éventuellement un organe de verrouillage mobile nécessitant une ou plusieurs actions manuelles pour l'utilisateur.

Lorsque le second robinet 5 est connecté sur le premier robinet 3, les extrémités des circuits 13, 15 de fluide des deux robinets 3, 5 sont mis en relation de façon étanche et l'écoulement de fluide entre ces deux circuits 13, 15 peut être autorisé ou non en fonction d'ouverture ou de fermeture de la ou des vannes du ou des circuits 13, 15.

A cet effet, le circuit 15 interne du second robinet 5 peut comporter un capteur 9 de pression dans le circuit 15, pour mesurer notamment la pression dans la bouteille 2 lorsque le circuit 15 du second robinet est mis en communication fluidique avec l'intérieur de la bouteille 2 via le premier robinet 3.

Ainsi, la bouteille 2 munie de son premier 3 robinet et de son chapeau 11 comporte un organe 18 de communication configuré pour communiquer sans fil selon la technologie de communication longue portée et basse consommation précitée. Ceci permet l'échange de données sur des portées allant par exemple jusqu'à 15km.

Par exemple cet organe 18 de communication peut comprendre un microcalculateur, une antenne, une batterie d'alimentation, un ou des ports d'entrée/sortie, et éventuellement un écran d'affichage d'information. En particulier, cet organe 18 de communication peut intégrer des composants appropriés commercialisés par la société SEMTECH (technologie LORA®) et/ou Sigfox tels que les émetteurs/récepteurs radiofréquence suivants : « transceivers » (émetteurs-récepteurs) SX1272, SX1273, SX1276 ou SX1280 de la société SEMTECH pour la technologie LoRa®. « transceiver » « SI868-25MW » de la société « ADEUNIS RF », « TD1202 Module » de la société « TELECOM DESIGN » pour la technologie Sigfox.

De façon générale peut être utilisé tout module radio capable d'héberger les couches logiques réalisant la mise en forme du signal conformément aux spécifications de la technologie concernée.

De même, le second robinet 5 comporte de préférence également un tel organe 12 de communication configuré pour communiquer sans fil selon la technologie de communication longue portée et basse consommation précitée. Ceci est particulièrement avantageux lorsque ce second robinet 5 est démontable de la bouteille 2 et peut être déplacé indépendamment de celle-ci et peut être raccordé à une autre bouteille 2 du même type.

De préférence, le dispositif 1 comprend ou utilise au moins un organe électronique de réception (et le cas échéant de transmission) des données transmises par l'appareil électronique de communication de la bouteille et/ou le second chapeau 5.

Cet organe électronique de réception est notamment configuré pour collecter des données relatives à la bouteille 2 et déterminer la position de l'appareil 18, 12 électronique de communication à partir des données transmises sans fil par ce dernier.

L'organe électronique de réception des données peut notamment être configuré pour déterminer la position de l'appareil électronique de communication par l'une au moins des technologies suivantes : la trilatération, la triangulation, la multilatération.

C'est-à-dire que la technologie de communication longue portée et basse consommation est utilisée pour localiser les entités mobiles (d'une part la bouteille 2 avec le premier robinet 3 et, d'autre part, le second chapeau 5, notamment s'il en est séparé).

Comme illustré schématiquement à la figure 2, le au moins un organe électronique de réception des données peut comprendre au moins l'un parmi : une antenne 9 raccordée à un réseau 12, 13 de communication (internet notamment), notamment un réseau de communication dématérialisé (« cloud ») comprenant au moins un serveur, un téléphone 14 sans fil, un boîtier de réception de données (et d'émission le cas échant), un ordinateur ou tout autre appareil approprié.

De préférence l'appareil électronique de communication comprend également au moins un organe 28 de communication configuré pour communiquer sans fil selon la technologie « Bluetooth ». Cet organe 28 de communication Bluetooth est intégré de préférence à la bouteille 2 ou au chapeau 11 ou sur le premier 3 robinet. Cet organe de communication supplémentaire est prévu pour une communication de portée moindre (typiquement entre 0 et 100m, notamment 30 à 100m).

De préférence également, le second robinet 5 comporte également un tel organe 22 de communication de type Buetooth.

De préférence également, l'appareil électronique de communication comprend au moins un organe 38 de communication configuré pour communiquer sans fil selon la technologie « Communication en champ proche » (« NFC ») et/ou selon la technologie « Identification par Radio Fréquence » (« RFID »).

Plus précisément, selon l'exemple représenté aux figures, un premier organe 8 de communication configuré pour communiquer sans fil selon la technologie « Communication en champ proche » (« NFC ») est disposé sur l'un parmi : la bouteille 2, le chapeau 11, le premier robinet 3.

Cet organe 8 de communication du type NFC est situé en partie haute lorsque la bouteille 2 est en position verticale d'utilisation, notamment en partie supérieure du chapeau 11.

Le dispositif 1 comprend un second organe 10 de communication configuré pour communiquer sans fil selon la technologie « Communication en champ proche » (« NFC ») disposé sur une première extrémité inférieure du second robinet 5. Ce second organe 10 de communication est agencé pour se plaçant de façon adjacente au premier organe 38 de communication (« NFC ») de la bouteille 2 lorsque le second robinet 5 est raccordé sur le premier robinet 2 pour échanger des données. Ce système de communication permet l'échange d'information(s) entre la bouteille 2 et le second robinet 5 qui s'y raccorde. Ce système de communication permet notamment le réveil/l'activation ou la mise en veille de tout ou partie des appareils électriques/électronique selon que le second robinet 5 est connecté ou non au premier robinet 3.

L'appareil électronique de communication comprend de préférence un troisième organe 38 de communication configuré pour communiquer sans fil selon la technologie « Communication en champ proche » (« NFC »). Celui-ci est disposé de préférence sur une seconde extrémité du second robinet 5 située en partie supérieure du second robinet 5 lorsque ce dernier est raccordé sur le premier robinet 3 et la bouteille 2 est en position verticale d'utilisation.

Pour la réception et le cas échant l'émission de données vers la bouteille 2 et/ou le second robinet 5, le dispositif peut inclure également un téléphone 14 sans fil (« Smartphone ») configuré pour communiquer selon la technologie « Bluetooth » et « NFC ».

De même, le dispositif peut inclure un boîtier 15 récepteur/émetteur de données sans fil, tel qu'un terminal électronique portable configuré (programmé) pour communiquer selon la technologie « Bluetooth » (et éventuellement « NFC ») et également selon le protocole de communication Lora® et/ou via le réseau de communication à bande de fréquence très étroite développé par la société Sigfox.

De cette façon, ledit boîtier 15 récepteur et émetteur peut être configuré pour recevoir des données transmises en longue portée par l'organe 8 de communication selon la technologie de communication longue portée et basse consommation et pour convertir et restituer ces données localement vers le téléphone 14 selon la technologie « Bluetooth ».

De même, le téléphone 14 (et éventuellement le boîtier 15) peut également venir échanger des données avec la bouteille 2, 3 et le second robinet 5 via les organes de communication NFC (via l'approche du téléphone ou autre près du troisième organe 38 de communication « NFC »).

Le téléphone 14 et/ou le boîtier 5 récepteur peuvent également être configurés pour localiser l'appareil électronique de communication (et donc la bouteille 2 et/ou le second robinet 5) à partir des données transmises localement sans fil par ce dernier. En particulier, le transfert de données via les organes 28, 22 à moyenne portée (Bluetooth) peuvent être utilisées pour localiser la bouteille 2 et/ou le second chapeau 5.

En particulier, cette localisation peut être mise à profit pour guider un utilisateur en vue de retrouver ces éléments 2, 5.

Par exemple, un radio guidage conforme à l'une au moins parmi les technologies suivantes peut être utilisé : par indication de la force du signal reçu :
- « RSSI » = "Received Signal Strength Indication »,
- par mesure de l'angle d'arrivée (« Angle of arrivai »=« AoA »),
- LoS (= « Line of Sight », ou « Ligne de Visée Directe ». Se dit d'une situation où il existe un chemin rectiligne et sans obstacle entre l'émetteur et le récepteur).
- par mesure de la différence du temps d'arrivée des signaux (« Time Difference of Arrivai »=« TDoA »),
- ToF (= « Time of Flight » ou « Temps de Vol » : le récepteur chronomètre le temps mis par les ondes à aller de l'émetteur au récepteur, par exemple en insérant l'instant précis de l'émission dans le message, et en le comparant à l'instant précis de réception. En divisant le temps de vol par la vitesse des ondes (a priori, la vitesse de la lumière dans le vide si l'essentiel du trajet se fait dans l'air), on obtient la distance totale parcourue par les ondes, Si on fait l'hypothèse que les seules ondes reçues par le récepteur sont venues en ligne droite depuis l'émetteur, on obtient le rayon du cercle centré sur le récepteur sur lequel se trouve l'émetteur. En combinant la donnée de plusieurs cercles, on peut localiser l'émetteur.
- TW-TOF = "Two-Way Time of Flight", ou "Temps de vol aller-retour",
- TWR = "Two-way Ranging", (Estimation de distance aller-retour). Comme précédemment, c'est l'émetteur qui peut chronométrer le temps de vol d'un signal qu'il émet et qui lui est renvoyé par un émetteur-récepteur (ce renvoi est soit considéré comme instantané, soit il faut déduire du temps chronométré le temps de traitement par l'émetteur-récepteur). Ici c'est donc l'initiateur de la procédure (l'émetteur) qui connait sa distance à l'émetteur-récepteur, à l'inverse du ToF où c'est le récepteur qui connait sa distance à l'initiateur (l'émetteur)
- la technologie NFER®,
- nLOS : non-line of sight, ou sans ligne de visée directe,

En effet, cette architecture de transmission de données permet de définir un référentiel tridimensionnel (altitude et coordonnées sur un plan ou une carte) ou relatif (distance, direction, hauteur ou différence de hauteur) par rapport à un autre point. Ce système peut être mis en œuvre en temps réel (intérieur ou extérieur) et remplace avantageusement les systèmes connus GPS, RFID...

Ceci permet la mesure et la collecte d'informations quelconques sur l'état de la bouteille 2 ou du robinet (notamment via un capteur de pression). Ces informations peuvent être communiquées et traitées en temps réel. Les informations peuvent être transmises à un système distant par un moyen de radiocommunication longue portée.

Dans le cas où la bouteille de gaz et ses équipements ou accessoires peuvent être dissociés (cf. notamment le second robinet 5 qui peut être nomade d'une bouteille 2 à une autre), le système est capable de récupérer une ou des informations d'un élément distant (via une communication sans fils) telles que : des données d'identification, de positionnement, des données issues de mesure, des états, etc. Ces données, une fois collectées par un système central, peuvent être prétraitées puis transmises à un système distant.

De préférence, le système est également capable de recevoir des informations ou des requêtes en provenance d'un équipement distant. Par exemple, il peut être transmis une requête d'ajustement ou de verrouillage d'une bouteille 2 de gaz, de nouveau paramètre de configuration du système (robinet 5....), d'une demande d'état, de statut ou de position géographique de l'équipement, etc...

Pour retrouver une bouteille ou un robinet 5 il est également possible de prévoir un système de radioguidage afin de rejoindre un équipement recherché. Ce guidage peut-être effectué au moyen de nombreuses méthodes telles que « RSSI », « AoA », « LoS », « ToA », « TDoA », « ToF », « TWF », « SDS-TWR » ou NFER® et l'utilisation d'algorithme associé (trilatération, triangulation, multilateration, etc.).

A cet effet, le système peut être complété par un accéléromètre ou magnétomètre (par exemple au niveau du téléphone 14 ou du boîtier 15), afin d'améliorer l'efficacité et la précision du système de guidage. En effet, l'utilisation d'un ou plusieurs accéléromètres aux équipements permet de connaitre la direction du déplacement de l'utilisateur ou de l'équipement recherché. En corrélant cette information aux variations du signal (Bluetooth et/ou longue portée) ceci peut donner une information de distance. Il est alors possible d'orienter l'utilisateur en direction de l'équipement 2, 5, recherché. L'utilisation d'un magnétomètre peut permettre d'augmenter encore le niveau d'information en donnant une information d'orientation géographique (cap en degré).

De même il est possible d'améliorer le service en mutualisant les systèmes de géolocalisation au système de radioguidage afin de pouvoir géolocaliser et/puis atteindre le ou les systèmes recherchés. Il est possible de mettre ne œuvre un terminal portable (par exemple Smartphone) afin de positionner l'équipement recherché sur une carte interactive (via un écran intégré) puis de rejoindre physiquement l'équipement au moyen du système de guidage.

Le dispositif décrit ci-dessus permet ainsi de gérer les éléments modulaires d'un ou plusieurs dispositifs de transfert de gaz. En particulier, le dispositif permet de gérer les échanges entre un ou plusieurs premiers ensembles (incluant une bouteille 2) et un ou plusieurs seconds robinets 5 sélectivement connectables.

Le dispositif permet de réaliser une reconnaissance automatique de la bouteille 2 par le second robinet 5 (et inversement) pour le cas échéant assurer une traçabilité et/ou compatibilité des connexions et utilisations.

Ceci permet une meilleure gestion d'un parc de bouteilles et de robinets associés. Ceci peut être utilisé notamment pour proposer des services tels que l'assistance à la gestion de stock, la commande automatique de matériel, de gaz, la mise à disposition des données de sécurité...

Dans le cas où le premier 3 et/ou le second 5 robinet est équipé d'un capteur de pression mesurant la pression dans la bouteille 2, cette information peut être transmise et/ou affichée et/ou utilisée pour calculer une autonomie, une consommation de gaz via une électronique de traitement (par exemple la logique 12 électronique de traitement de données comprenant au moins un microprocesseur ou tout autre système approprié), pour générer une alerte (par exemple signaler que la bouteille est presque vide).

## Revendications

1. Dispositif (1) de fourniture de fluide sous pression, notamment de gaz sous pression, comprenant une bouteille (2) de fluide sous pression comprenant au moins un premier robinet (3) raccordé à la bouteille (2) et comprenant un circuit (13) interne de fluide comportant un clapet (4) d'isolation, le dispositif (1) comprenant un appareil (8, 18, 12, 22) électronique de communication de données à distance sans fil par ondes électromagnétiques, **caractérisé en ce que** ledit appareil (8, 18, 28, 38, 12, 22) électronique de communication comprend un organe (18) de communication configuré pour communiquer sans fil selon l'un au moins des technologies de communication longue portée et basse consommation à modulation de fréquence et/ou de phase suivantes : la technologie de communication Lora c'est-à-dire une technologie de communication utilisant une modulation de fréquence à étalement de spectre et sauts de fréquence permettant notamment la reconstitution des données transmises même lorsqu'elles sont reçues avec un rapport signal-sur-bruit inférieur à 0 dB, opérant sur des bandes de fréquence déterminées, en particulier de 433,0 à 434,79 MHz, de 863 à 870 MHz, de 902 à 928 MHz, de 2400 à 2500 MHz, la technologie de communication Sigfox c'est-à-dire une technologie de communication utilisant une modulation de fréquence ou une modulation de phase synthétisant une modulation de fréquence, à bande très étroite (dite « UNB », « Ultra-Narrow Band »), permettant d'obtenir une densité spectrale de puissance importante afin d'augmenter le rapport signal à bruit, opérant sur des bandes de fréquence déterminées, en particulier de 433,0 à 434,79 MHz, de 863 à 870 MHz, de 902 à 928 MHz, de 2400 à 2500 MHz et **en ce que** le dispositif (1) de fourniture de fluide comprend un chapeau (11) de protection monté sur la bouteille (2) pour protéger le premier robinet (3) et un second robinet (5) raccordé de façon amovible sur le premier robinet (2) ledit appareil (8, 18, 28, 38, 12, 22) électronique de communication étant situé sur la bouteille (2) et/ou sur le chapeau (11) et/ou sur le premier robinet (3) et/ou sur le second robinet (5).

2. Dispositif selon la revendications 1, **caractérisé en ce qu'**il comporte au moins un organe (9, 12, 13, 14,15) électronique de réception des données transmises sans fil par l'appareil (8, 18, 28, 38, 12, 22) électronique de communication, l'organe (9, 12, 13, 14,15) électronique de réception étant configuré pour déterminer la position de l'appareil (8, 18, 28, 38, 12, 22) électronique de communication à partir des données transmises sans fil par ce dernier.

3. Dispositif selon la revendication 2 **caractérisé en ce que** l'organe électronique de réception des données est configuré pour déterminer la position de l'appareil électronique de communication par l'une au moins des technologies suivantes : la trilatération, la triangulation, la multilatération.

4. Dispositif selon l'une quelconque des revendications 2 à 3, **caractérisé en ce que** le au moins un organe (9, 12, 13, 14,15) électronique de réception des données comprend au moins l'un parmi : une antenne (9) raccordée à un réseau (12, 13) de communication, notamment un réseau de communication dématérialisé (« cloud ») comprenant au moins un serveur, un téléphone (14) sans fil.

5. Dispositif selon la revendication 4, **caractérisé en ce que** l'appareil (8, 18, 28, 12, 22) électronique de communication comprend au moins un organe (28) de communication configuré pour communiquer sans fil selon la technologie "Bluetooth".

6. Dispositif selon la revendication 2, **caractérisé en ce que** le moins un organe (9, 12, 13, 14,15) électronique de réception des données comprend un téléphone (14) sans fil configuré pour communiquer selon la technologie « Bluetooth » et un boîtier (15) électronique récepteur et émetteur de données sans fil configuré pour communiquer selon la technologie « Bluetooth » et selon le protocole de communication Lora c'est-à-dire une technologie de communication utilisant une modulation de fréquence à étalement de spectre et sauts de fréquence permettant notamment la reconstitution des données transmises même lorsqu'elles sont reçues avec un rapport signal-sur-bruit inférieur à 0 dB, opérant sur des bandes de fréquence déterminées, en particulier de 433,0 à 434,79 MHz, de 863 à 870 MHz, de 902 à 928 MHz, de 2400 à 2500 MHz et/ou via le réseau de communication à bande de fréquence très étroite Sigfox c'est-à-dire une technologie de communication utilisant une modulation de fréquence ou une modulation de phase synthétisant une modulation de fréquence, à bande très étroite (dite « UNB », « Ultra-Narrow Band »), permettant d'obtenir une densité spectrale de puissance importante afin d'augmenter le rapport signal à bruit, opérant sur des bandes de fréquence déterminées, en particulier de 433,0 à 434,79 MHz, de 863 à 870 MHz, de 902 à 928 MHz, de 2400 à 2500 MHz, et **en ce que** ledit boîtier (15) récepteur et émetteur est configuré pour recevoir des données transmises par l'organe (8) de communication selon la technologie de communication longue portée et basse consommation et pour convertir et restituer ces données vers le téléphone (14) selon la technologie « Bluetooth ».

7. Dispositif selon la revendication 6, **caractérisé en ce que** le boîtier (15) récepteur et émetteur est configuré pour recevoir des données transmises selon la technologie « Bluetooth » par le téléphone (14) et convertir et restituer ces données vers l'organe (8) de communication selon la technologie de communication longue portée et basse consommation.

8. Dispositif selon l'une quelconque des revendications 6 ou 7, **caractérisé en ce que** le téléphone (14) et/ou le boîtier (5) récepteur comprend un accéléromètre et/ou magnétomètre.

9. Dispositif selon l'une quelconque des revendications 1 à 8, **caractérisé en ce que** l'appareil électronique de communication comprend au moins un organe (38) de communication configuré pour communiquer sans fil selon la technologie « Communication en champ proche » (« NFC ») et/ou selon la technologie « Identification par Radio Fréquence » (« RFID »).

10. Dispositif selon l'une quelconque des revendications 1 à 9, **caractérisé en ce que** l'appareil électronique de communication comprend au moins un premier organe (8) de communication configuré pour communiquer sans fil selon la technologie « Communication en champ proche » (« NFC ») disposé sur l'un parmi : la bouteille (2), le chapeau (11), le premier robinet (3), le dispositif (1) comprenant un second organe (10) de communication configuré pour communiquer sans fil selon la technologie « Communication du second robinet (5) et se plaçant de façon adjacente au premier organe (38) de communication (« NFC ») lorsque le second robinet (5) est raccordé sur le premier robinet (2) pour permettre un échange de données.

11. Dispositif selon la revendication 10, **caractérisé en ce que** l'appareil électronique de communication comprend un troisième organe (38) de communication configuré pour communiquer sans fil selon la technologie « Communication en champ proche » (« NFC ») disposé sur une seconde extrémité du second robinet (5) située en partie supérieure du second robinet (5) lorsque ce dernier est raccordé sur le premier robinet (3) et la bouteille (2) est en position verticale d'utilisation.

12. Dispositif selon l'une quelconque des revendications 1 à 11 combinée avec l'une quelconque des revendications 4 à 6, **caractérisé en ce que** l'appareil électronique de communication comprend un premier organe (28) de communication configuré pour communiquer sans fil selon la technologie « Bluetooth » disposé sur la bouteille (2) et/ou sur le chapeau (11) et/ou sur le premier robinet (3).

13. Dispositif selon la revendication 12 **caractérisé en ce que** l'appareil électronique de communication comprend un second organe (22) de communication configuré pour communiquer sans fil selon la technologie « Bluetooth » et situé sur le second robinet (5).

## Patentansprüche

1. Vorrichtung (1) zum Liefern von druckbeaufschlagtem Fluid, insbesondere von druckbeaufschlagtem Gas, die eine Flasche (2) mit druckbeaufschlagtem Fluid umfasst, die mindestens einen ersten Schließhahn (3), der an die Flasche (2) angeschlossen ist, umfasst, und einen internen Fluidkreislauf (13) umfasst, der ein Absperrventil (4) umfasst, wobei die Vorrichtung (1) eine elektronische Einrichtung (8, 18, 12, 22) zur drahtlosen Datenfernkommunikation durch elektromagnetische Wellen umfasst, **dadurch gekennzeichnet, dass** die elektronische Kommunikationseinrichtung (8, 18, 28, 38, 12, 22) ein Kommunikationsorgan (18) umfasst, das konfiguriert ist, um drahtlos gemäß mindestens einer der Langstrecken- und Niedrigverbrauch-Kommunikationstechnologien mit Frequenzmodulation und/oder folgenden Phasen zu kommunizieren: die Lora-Kommunikationstechnologie, das heißt eine Kommunikationstechnologie, die eine Frequenzmodulation mit Spreizspektrum und Frequenzsprüngen verwendet, die insbesondere die Rekonstitution der übertragenen Daten sogar erlaubt, wenn sie mit einem Signal-Rausch-Verhältnis unter 0 dB empfangen werden, die auf bestimmten Frequenzbändern arbeitet, im Besonderen von 433,0 bis 434,79 MHz, von 863 bis 870 MHz, von 902 bis 928 MHz, von 2400 bis 2500 MHz, die Sigfox-Kommunikationstechnologie, das heißt eine Kommunikationstechnologie, die eine Frequenzmodulation oder eine Phasenmodulation, die eine Frequenzmodulation synthetisiert, mit sehr schmalem Band ("UNB", "Ultra-Narrow Band", genannt) verwendet, die es erlaubt, eine hohe spektrale Leistungsdichte zu erhalten, um das Signal-Rausch-Verhältnis zu erhöhen, die auf bestimmten Frequenzbändern arbeitet, im Besonderen von 433,0 bis 434,79 MHz, von 863 bis 870 MHz, von 902 bis 928 MHz, von 2400 bis 2500 MHz, und dass die Vorrichtung (1) zum Liefern von Fluid eine Schutzkappe (11), die auf die Flasche (2) montiert ist, um den ersten Schließhahn (3) und einen zweiten Schließhahn (5), der abnehmbar auf dem ersten Schließhahn (2) angeschlossen ist, zu schützen, umfasst, wobei sich die elektronische Kommunikationseinrichtung (8, 18, 28, 38, 12, 22) auf der Flasche (2) und/oder auf der Kappe (11) und/oder auf dem ersten Schließhahn (3) und/oder auf dem zweiten Schließhahn (5) befindet.

2. Vorrichtung nach Anspruch 1, **dadurch gekennzeichnet, dass** sie mindestens ein elektronisches Organ (9, 12, 13, 14, 15) zum Empfang der Daten, die drahtlos von dem elektronischen Kommunikationseinrichtung (8, 18, 28, 38, 12, 22) übertragen werden, umfasst, wobei das elektronische Empfangsorgan (9, 12, 13, 14, 15) konfiguriert ist, um die Position der elektronischen Kommunikationseinrichtung (8, 18, 28, 38, 12, 22) ausgehend von den Daten zu bestimmen, die von diesem Letzteren drahtlos übertragen werden.

3. Vorrichtung nach Anspruch 2, **dadurch gekennzeichnet, dass** das elektronische Empfangsorgan der Daten konfiguriert ist, um die Position der elektronischen Kommunikationseinrichtung durch mindestens eine der folgenden Technologien zu bestimmen: die Trilateration, die Triangulation, die Multilateration.

4. Vorrichtung nach einem der Ansprüche 2 bis 3, **dadurch gekennzeichnet, dass** das mindestens eine elektronische Empfangsorgan (9, 12, 13, 14, 15) der Daten mindestens eines aus Folgendem umfasst: eine Antenne (9), die an ein Kommunikationsnetzwerk (12, 13), insbesondere ein dematerialisiertes Kommunikationsnetzwerk ("Cloud"), das mindestens einen Server umfasst, angeschlossen ist, ein drahtloses Telefon (14).

5. Vorrichtung nach Anspruch 4, **dadurch gekennzeichnet, dass** die elektronische Kommunikationseinrichtung (8, 18, 28, 12, 22) mindestens ein Kommunikationsorgan (28) umfasst, das konfiguriert ist, um drahtlos gemäß der "Bluetooth"-Technologie zu kommunizieren.

6. Vorrichtung nach Anspruch 2 oder 3, **dadurch gekennzeichnet, dass** das mindestens eine elektronische Empfangsorgan (9, 12, 13, 14, 15) der Daten ein drahtloses Telefon (14) umfasst, das konfiguriert ist, um gemäß der "Bluetooth"-Technologie zu kommunizieren, und ein elektronisches drahtloses Datenempfangs- und Sendegehäuse (15), das konfiguriert ist, um gemäß der "Bluetooth"-Technologie und gemäß dem Lora-Kommunikationsprotokoll zu kommunizieren, das heißt einer Kommunikationstechnologie, die eine Frequenzmodulation mit Spreizspektrum und Frequenzsprüngen verwendet, die insbesondere die Rekonstitution der übertragenen Daten sogar erlaubt, wenn sie mit einem Signal-Rausch-Verhältnis unter 0 dB empfangen werden, die auf bestimmten Frequenzbändern arbeitet, im Besonderen von 433,0 bis 434,79 MHz, von 863 bis 870 MHz, von 902 bis 928 MHz, von 2400 bis 2500 MHz, und/oder über das Sigfox-Kommunikationsnetzwerk mit sehr schmalem Frequenzband, das heißt einer Kommunikationstechnologie, die eine Frequenzmodulation oder eine Phasenmodulation, die eine Frequenzmodulation synthetisiert, mit sehr schmalem Band ("UNB", "Ultra-Narrow Band", genannt) verwendet, die es erlaubt, eine hohe spektrale Leistungsdichte zu erhalten, um das Signal-Rausch-Verhältnis zu erhöhen, die auf bestimmten Frequenzbändern arbeitet, im Besonderen von 433,0 bis 434,79 MHz, von 863 bis 870 MHz, von 902 bis 928 MHz, von 2400 bis 2500 MHz, und dadurch, dass das Empfangs- und Sendegehäuse (15) konfiguriert ist, um Daten zu empfangen, die von dem Kommunikationsorgan (8) gemäß der Langstrecken- und Niedrigverbrauch-Kommunikationstechnologie übertragen werden, und um diese Daten umzuwandeln und zu dem Telefon (14) gemäß der "Bluetooth"-Technologie wiederzugeben.

7. Vorrichtung nach Anspruch 6, **dadurch gekennzeichnet, dass** das Empfangs- und Sendegehäuse (15) konfiguriert ist, um Daten, die gemäß der "Bluetooth"-Technologie von dem Telefon (14) übertragen werden, zu empfangen und diese Daten umzuwandeln und zu dem Kommunikationsorgan (8) gemäß der Langstrecken- und Niedrigverbrauch-Kommunikationstechnologie wiederzugeben.

8. Vorrichtung nach einem der Ansprüche 6 oder 7, **dadurch gekennzeichnet, dass** das Telefon (14) und/oder das Empfangsgehäuse (5) einen Beschleunigungsmesser und/oder ein Magnetometer umfasst.

9. Vorrichtung nach einem der Ansprüche 1 bis 8, **dadurch gekennzeichnet, dass** die elektronische Kommunikationseinrichtung mindestens ein Kommunikationsorgan (38) umfasst, das konfiguriert ist, um drahtlos gemäß der "Nahfeldkommunikations"-Technologie ("NFC") und/oder gemäß der "Funkfrequenzidentifikations"-Technologie ("RFID") zu kommunizieren.

10. Vorrichtung nach einem der Ansprüche 1 bis 9, **dadurch gekennzeichnet, dass** die elektronische Kommunikationseinrichtung mindestens ein erstes Kommunikationsorgan (8) umfasst, das konfiguriert ist, um drahtlos gemäß der "Nahfeldkommunikations"-Technologie ("NFC") zu kommunizieren, das auf einem aus Folgendem angeordnet ist: der Flasche (2), der Kappe (11), dem ersten Schließhahn (3), wobei die Vorrichtung (1) ein zweites Kommunikationsorgan (10) umfasst, das konfiguriert ist, um drahtlos gemäß der "Nahfeldkommunikations"-Technologie ("NFC") zu kommunizieren, das auf einem ersten unteren Ende des zweiten Schließhahns (5) angeordnet ist und sich benachbart zu dem ersten Kommunikationsorgan (38) ("NFC") platziert, wenn der zweite Schließhahn (5) auf dem ersten Schließhahn (2) angeschlossen wird, um einen Datenaustausch zu erlauben.

11. Vorrichtung nach Anspruch 10, **dadurch gekennzeichnet, dass** die elektronische Kommunikationseinrichtung ein drittes Kommunikationsorgan (38) umfasst, das konfiguriert ist, um drahtlos gemäß der "Nahfeldkommunikations"-Technologie ("NFC") zu kommunizieren, das auf einem zweiten Ende des zweiten Schließhahns (5) angeordnet ist, das sich im oberen Teil des zweiten Schließhahns (5) befindet, wenn dieser Letztere auf dem ersten Schließhahn (3) angeschlossen ist und sich die Flasche (2) in vertikaler Verwendungsposition befindet.

12. Vorrichtung nach einem der Ansprüche 1 bis 11, kombiniert mit einem der Ansprüche 4 bis 6, **dadurch gekennzeichnet, dass** die elektronische Kommunikationseinrichtung ein erstes Kommunikationsorgan (28) umfasst, das konfiguriert ist, um drahtlos gemäß der "Bluetooth"-Technologie zu kommunizieren, das auf dem auf der Flasche (2) und/oder auf der Kappe (11) und/oder auf dem ersten Schließhahn (3) angeordnet ist.

13. Vorrichtung nach Anspruch 12, **dadurch gekennzeichnet, dass** die elektronische Kommunikationseinrichtung ein zweites Kommunikationsorgan (22) umfasst, das konfiguriert ist, um drahtlos gemäß der "Bluetooth"-Technologie zu kommunizieren und sich auf dem zweiten Schließhahn (5) befindet.

## Claims

1. Device (1) for supplying pressurised fluid, in particular pressurised gas, comprising a pressurised fluid cylinder (2) comprising at least one first tap (3) connected to the cylinder (2) and comprising an inner fluid circuit (13) comprising an insulation valve (4), the device (1) comprising an electronic device (8, 18, 12, 22) for wirelessly communicating data remotely through electromagnetic waves, **characterised in that** said electronic communication device (8, 18, 28, 38, 12, 22) comprises a communication member (18) configured to wirelessly communicate according to at least one of the following long-range and low-consumption frequency modulation and/or phase communication technologies: the Lora communication technology, i.e. a communication technology using a frequency hopping spread spectrum frequency modulation, making it possible, in particular, for the recovery of data transmitted even when it is received with a signal-to-noise ratio less than 0dB, operating on determined frequency bands, in particular from 433.0 to 434.79MHz, from 863 to 870MHz, from 902 to 928MHz, from 2400 to 2500MHz, the Sigfox communication technology, i.e. a communication technology using a frequency modulation or a phase modulation synthesising a frequency modulation, ultra-narrow band (UNB), making it possible to obtain a spectral density of significant power, in order to increase the signal-to-noise ratio, operating on determined frequency bands, in particular from 433.0 to 434.79MHz, from 863 to 870MHz, from 902 to 928MHz, from 2400 to 2500MHz and **in that** the device (1) for supplying fluid comprises a protective cap (11) mounted on the cylinder (2) to protect the first tap (3) and a second tap (5) removably connected on the first tap (2), said electronic communication device (8, 18, 28, 38, 12, 22) being situated on the cylinder (2) and/or on the cap (11) and/or on the first tap (3) and/or on the second tap (5).

2. Device according to claim 1, **characterised in that** it comprises at least one electronic member (9, 12, 13, 14, 15) for receiving data transmitted wirelessly by the electronic communication device (8, 18, 28, 38, 12, 22), the electronic receiving device (9, 12, 13, 14, 15) being configured to determine the position of the electronic communication device (8, 18, 28, 38, 12, 22) from the data transmitted wirelessly by the latter.

3. Device according to claim 2, **characterised in that** the electronic member for receiving data is configured to determine the position of the electronic communication device by at least one of the following technologies: trilateration, triangulation, multilateration.

4. Device according to any one of claims 2 to 3, **characterised in that** the at least one electronic member (9, 12, 13, 14, 15) for receiving data comprising at least one from among: an antenna (9) connected to a communication network (12, 13), in particular a cloud communication network comprising at least one server, one wireless telephone (14).

5. Device according to claim 4, **characterised in that** the electronic communication device (8, 18, 28, 12, 22) comprises at least one communication member (28) configured to wirelessly communicate according to the "Bluetooth" technology.

6. Device according to claim 2 or 3, **characterised in that** the at least one electronic member (9, 12, 13, 14, 15) for receiving data comprises a wireless telephone (14) configured to communicate according to the "Bluetooth" technology and an electronic receiving case (15) and wireless data transmitter configured to communicate according to the "Bluetooth" technology and according to the Lora communication protocol, i.e. a communication technology using a frequency hopping spread spectrum frequency modulation, making it possible in particular to recover data transmitted, even when it is received with a signal-to-noise ratio less than 0dB, operating on determined frequency bands, in particular from 433.0 to 434.79MHz, from 863 to 870MHz, from 902 to 928MHz, from 2400 to 2500MHz and/or via the Sigfox ultra-narrow frequency band communication network, i.e. a communication technology using a frequency modulation or a phase modulation synthesising a frequency modulation, ultra-narrow band (UNB), making it possible to obtain a spectral density of significant power in order to increase the signal-to-noise ratio, operating on determined frequency bands, in particular from 433.0 to 434.79MHz, from 863 to 870MHz, from 902 to 928MHz, from 2400 to 2500MHz, and **in that** said receiving and transmitting case (15) is configured to receive data transmitted by the communication member (8) according to the long-range and low-consumption communication technology and to convert and recover this data to the telephone (14) according to the "Bluetooth" technology.

7. Device according to claim 6, **characterised in that** the receiving and transmitting case (15) is configured to receive data transmitted according to the "Bluetooth" technology by the telephone (14) and to convert and recover this data to the communication member (8) according to the long-range and low-consumption communication technology.

8. Device according to any one of claims 6 or 7, **characterised in that** the telephone (14) and/or the receiving case (5) comprises an accelerometer and/or magnetometer.

9. Device according to any one of claims 1 to 8, **characterised in that** the electronic communication device comprises at least one communication member (38) configured to wirelessly communicate according to the "near-field communication" (NFC) technology and/or according to the "radio frequency identification" (RFID) technology.

10. Device according to any one of claims 1 to 9, **characterised in that** the electronic communication device comprises at least one first communication member (8) configured to wirelessly communicate according to the "near-field communication" (NFC) technology arranged on one from among: the cylinder (2), the cap (11), the first tap (3), the device (1) comprising a second communication member (10) configured to wirelessly communicate according to the "near-field communication" (NFC) technology arranged on a first lower end of the second tap (5) and being placed adjacently to the first NFC communication member (38) when the second tap (5) is connected to the first tap (2) to make it possible for a data exchange.

11. Device according to claim 10, **characterised in that** the electronic communication device comprises a third communication member (38) configured to wirelessly communicate according to the "near-field communication" (NFC) technology arranged on a second end of the second tap (5) situated in the upper portion of the second tap (5) when the latter is connected to the first tap (3) and the cylinder (2) is in the vertical use position.

12. Device according to any one of claims 1 to 11 combined with any one of claims 4 to 6, **characterised in that** the electronic communication device comprises a first communication member (28) configured to wirelessly communicate according to the "Bluetooth" technology arranged on the cylinder (2) and/or on the cap (11) and/or on the first tap (3).

13. Device according to claim 12, **characterised in that** the electronic communication device comprises a second communication member (22) configured to wirelessly communicate according to the "Bluetooth" technology and situated on the second tap (5).
